# EUROPEAN PATENT SPECIFICATION

(11) **EP 1 980 745 B1**
(45) Date of publication and mention of the grant of the patent: **01.02.2012**
(21) Application number: 08002906.9
(22) Date of filing: 16.02.2008
(51) Int. Cl.: F03B 9/00

(54) **Water wheel**
Wasserrad
Roue à aubes

(30) Priority: 10.04.2007 LB 782807
(43) Date of publication of application: 15.10.2008
(73) Proprietor: Ibrahim, Ibrahim Hussein, Beirut (LB)
(72) Inventor: Ibrahim, Ibrahim Hussein, Beirut (LB)
(74) Representative: Plöger, Jan Manfred

(56) References cited:
- US-A- 920 361
- US-A- 1 497 158
- US-A- 4 151 719

## Description

The invention relates a hydroelectric power plant comprising a chain system having at least a first chain, a second chain, and at least two toothed wheels engaged with the first chain and the second chain; a plurality of water containers attached to the chain system, a water outlet opening arranged for allowing water to fill the water containers, so that the water containers cause the chains to move in a working direction and to turn the at least two wheels in a turning direction.

Such a hydroelectric power plant is known from US 2,758,814. This hydroelectric power plant however suffers from the drawback that it requires significant space. Additionally, each water container needs to be supported by heavy wheels that carry their weights. Another hydroelectric power plant is known from US 4,945,755. It is a disadvantage of that hydroelectric power plant that the water containers might tend to move in horizontal direction, e.g. in the case a thunderstorm.

Further, especially for hydroelectric power plants for high heads, i.e. for a large difference of water levels, the chains are elastically stretched due to the water load, raising the problem of the chains missing the sprockets of the teethed wheels.

Further hydroelectric power plants are known from US 4,112,686, US 4,151,719 and US 5, 684, 335 that suffer from the same shortcomings as described above.

From US 1, 497,158 a hydroelectric power plant is known showing the features of the preamble of claim 1. It is a disadvantage that a significant amount of water may spill over the water containers, thus reducing the efficiency of the hydroelectric power plant. From US 920, 361 another hydroelectric power plant is known that suffers from the same disadvantage.

It is an objective of the present invention to provide a hydroelectric power plant having a reduced spill over rate, thus increasing the degree of efficiency.

The invention solves the problem by a hydroelectric power plant according to claim 1.

It is an advantage of the present invention that the water containers are snuggly guided by the lead and the rollers. Thus, horizontal oscillations are effectively suppressed. As vibrations and horizontal movements are effectively suppressed, the hydroelectric power plant according to the present invention may be run much safer than known power plants.

In a preferred embodiment, the hydroelectric power plant comprises a plurality of horizontal guiding assemblies connecting the at least two chains, each horizontal guiding assembly having (i) a guiding rod, (ii) a first sleeve linking the guiding rod to the first chain, (iii) a second sleeve linking the guiding rod to the second chain, (iv) a first roller set turnably mounted to the first sleeve at a first end of the horizontal guiding assembly, (v) a second roller set turnably mounted to the second sleeve at a second end of the horizontal guiding assembly, (vi) the lead cooperating with the first roller set and the second roller set for leading the horizontal guiding assemblies. This yields a construction that is easy to manufacture and to maintain.

It is preferred that the guiding rod is removably received in the first sleeve and the second sleeve, such that guiding rod may be removed without amounting any of the chains. As the rollers might wear, it is necessary from time to time to replace them. The construction is easy to maintain simply by changing the guiding rod and/or the roller sets.

Preferably the lead comprises an inner lead element and an outer lead element, the inner roller being guided by the inner lead element and the outer roller being guided by the outer lead element, wherein the inner roller and the outer roller are coaxially mounted to the guiding rod. This yields a tight guiding having low friction.

To reduce water losses, it is preferred to provide for a flexible barrier element linking two neighboring water containers for directing water into the water containers during a filling procedure. These flexible barrier elements may be made from rubber or special cloth and extend in the direction of the guiding rod and/or a longitudinal axis of the water containers. In this embodiment, water may flow into the water containers one by one, they flexible barrier covering the hinges of the water containers leaking them to the chains. Thus, the flexible barrier elements prevent the water from leaking.

To provide for a cheap, lightweight, and easy to manufacture water container, the water containers comprise a plastic tank received in a metal frame. The water containers may be fabricated from light weight materials, such as plastic, aluminium, or special cloth. It is preferred to provide a support like a steel frame. This provides for a light weight construction.

The water container may be carried by two parallel chains, the water container being mounted between those chains for descending in a balanced motion during operation. The lead and the rollers provide for a balanced and almost frictionlessly motion and stability perpendicular to the moving direction of the water containers.

The lead also avoids a shaking of the water containers in the tempest and prevents the water tanks from bending perpendicular down especially, before the water containers reach a lower position in which the water is released from the water containers. It is possible to use chains comprising two or more metal strips for each link. The lead thus permits the water containers to move smoothly in a circular path, especially around a lower wheel leading to a less noise.

The important consequence of the present invention is that it yields a high efficiency as it is applicable for putting huge weights of water into the water containers on only one side of the power plant thus providing a successful practical solution. The hydroelectric power plant according to the present invention may have about 100 water containers each having a weight of only 50 kg. The dimensions of the water containers may be 1,2 x 1,2 x 1,2 m, so that the water containers have a water load of more than 1800 kg. Preferably, the hydroelectric power plant has a height of more than 60 m. However, it is also possible to provide for a hydroelectric power plant having a height between 30 to 40 m or any height. Given these facts, the proportional weight of the water containers is only 1/36 of the mass of the water containers.

In other words: the present invention is a devised station completely with its work mechanism nearly. Thus, it is not a development for conventional machine or system. Hence, it is more precise to say, the elements of novelty and claims which needed the protection are: in brief, is the modifying of circle shape to increase its positive portion. So, this mode for carrying out the invention is obvious that many changes and modifications may be made thereunto without departing front the spirit and scope of the invention. Where, it may carry out in many different other ways and forms, e.g. such as a dual strong steel track design to track the continuous chain track or vice-versa. that means the chains tracks the dual tracks, thereby the predetermined moving of the reservoirs pull the chains which may use the small gears instead of the aforesaid or may carry the reservoirs from their backs that by attaching them by the chains from the back, in this case, that allow us to construct the Station in many different angles on the face of the river, to be matching the inclined river angle. And that is not as the above model which carrying by the chains from the mid of reservoir which fitting with the right angle only.

The changing of the circle shape with malleable new specifications, by the gears and chains and the tracks to fit a design system integrated enable to control and capable for Optimum efficient extraction from the circle.

The gears, and the chains, represent the role of machine for generating the mechanical energy, when they circulate on their path. The chain generates the mechanical energy by itself by powering a generator via a driving wheel. While it was known as transmitting the energy, and changing its direction, as well as carrying the weights.

The circle shape and its active mechanism were realized according to the invention by an integrated system having chains, gears, and tracks. The invention also introduces new dimensions to forming it in purpose to increase (the positive portion) or (the active portion) of the circle. Where the active portion equals the hundreds tens of the natural circle circumference, and invested the most efficient point on the circle. Several factors were combined to make the devised station work so that it represents the role of circle, but according to the standards determines technologies and different mechanisms with respect to the conventional systems.

Embodiments of the present invention are now explained with reference to the companying drawings, in which:
- Figure 1: depicts a side view of the hydroelectric power plant according to the invention;
- Figure 2a: shows a detail of a second embodiment of a hydroelectric power plant according to the invention;
- Figures 2b-2e: show a detail of rollers cooperating with the lead as shown in Figure 2a, and another embodiment of the invention;
- Figure 3: is a schematic view of another embodiment of a hydroelectric power plant according to the invention;
- Figure 4: depicts yet another embodiment of the hydroelectric power plant according to the invention;
- Figure 5: depicts another embodiment;
- Figures 5a-5c: shows details of the embodiment according to Fig. 5;
- Figures 6a-6d: show water containers according to preferred embodiments of the present invention;
- Figure 7a: depicts a detail of a horizontal guiding assembly for a hydroelectric power plant according to the invention;
- Figure 7b: is a detail showing a flexible barrier element for the embodiment according to Figure 7a;
- Figure 8: is another schematic view of an inventive hydroelectric power plant, and
- Figure 9: shows the barrier elements a preferred embodiment of a hydroelectric power plant according to the invention.

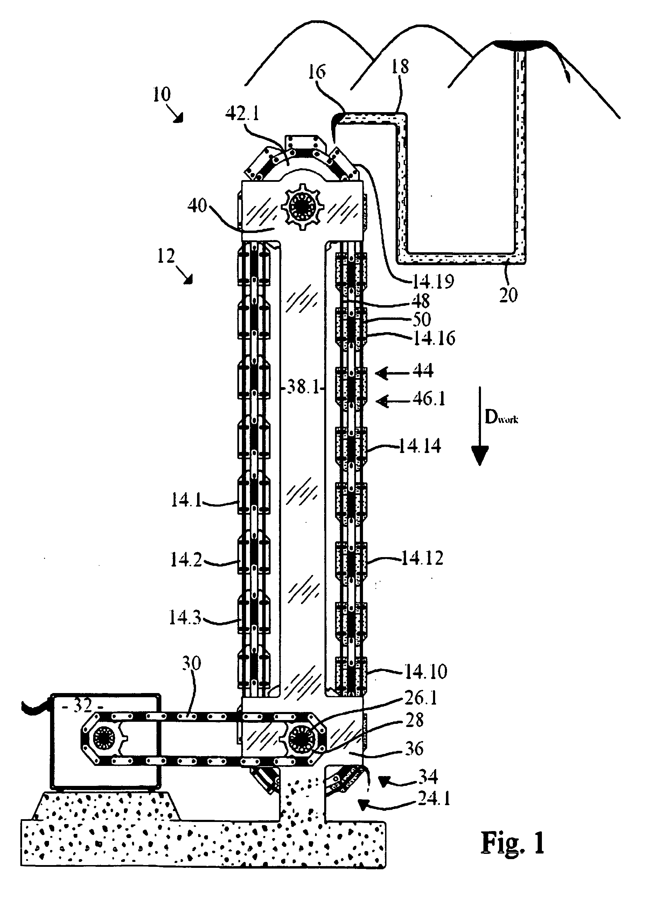

Referring to Figure 1, a vertical hydroelectric power plant 10 comprises a chain system 12, a plurality of water containers 14.2, 14.2, ... and a water outlet opening 16 in a water duct 18 that is arranged for allowing water 20 in water duct 18 to fill the water containers 14.1, 14.2, ....

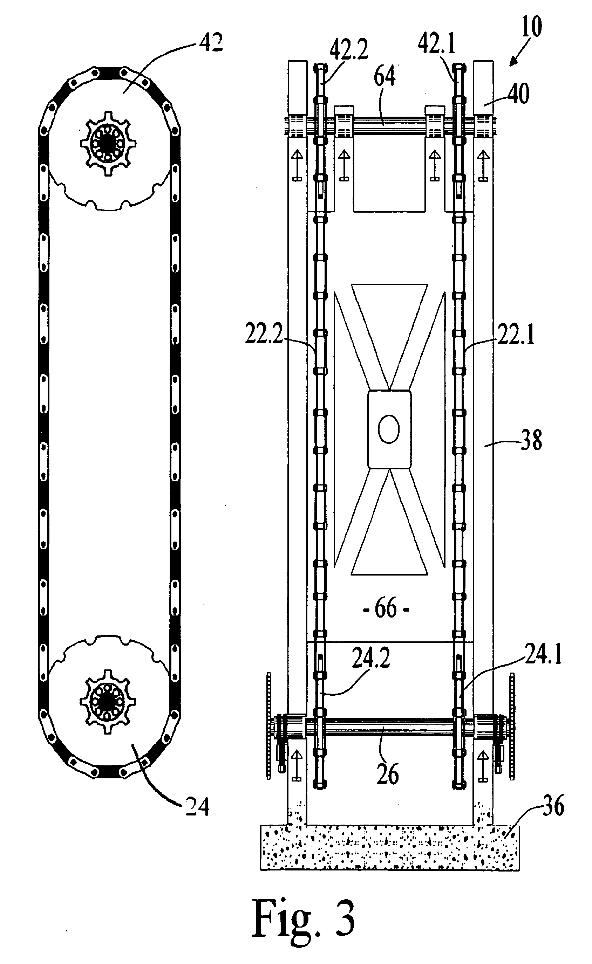

In the following, reference numerals without a counting suffix relate to the referenced object as such. Filing of some of the water containers 14, in Figure 1 in particular water container 14.19, causes a first chain 22.1 of chain system 12 to move in a working direction D_{work}. First chain 22.1 meshes with a first transmission wheel 24.1 (cf. Fig. 3) that is mounted to a first axle 26.1 transmitting the rotary energy to a driving wheel 28. The driving wheel 28 cooperates with a driving chain 30 driving a generator 32 for generating electrical energy.

The water containers 14 filled with water descend in a vertical way and release the water at a down end 34 of chain system 12. The axle 26.1 is fixed on a concrete base 36 by heavy duty bearings. The concrete base comprises a first concrete column 38.1, the concrete column 38.1 having a column head 40 to which a first upper wheel 42.1 is mounted. First upper wheel 42.1 meshes with first chain 22.1.

Hydroelectric power plant 10 comprises a lead 44 having a first lead system 46.1, which in turn comprises an inner lead element 48 and an outer lead element 50. The lead 44 guides the water containers 14 on their way on a circular path, i.e. a closed loop, upwards, downwards, and around driving wheel 28 and upper wheel 42.

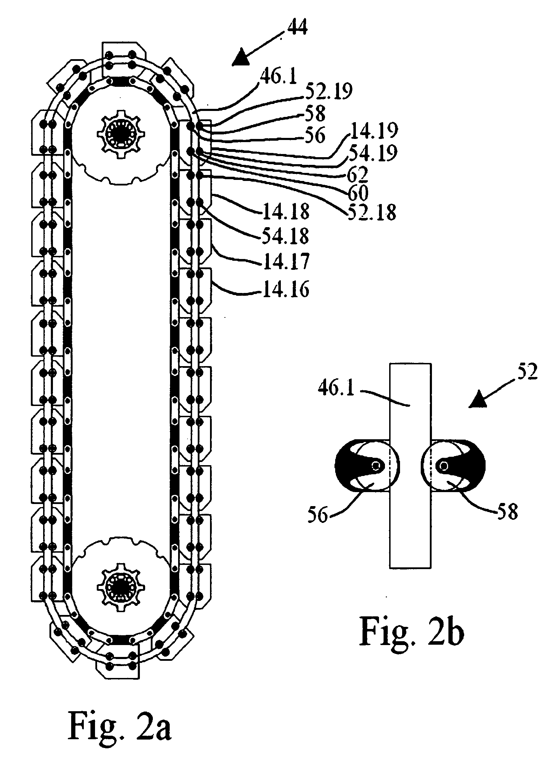

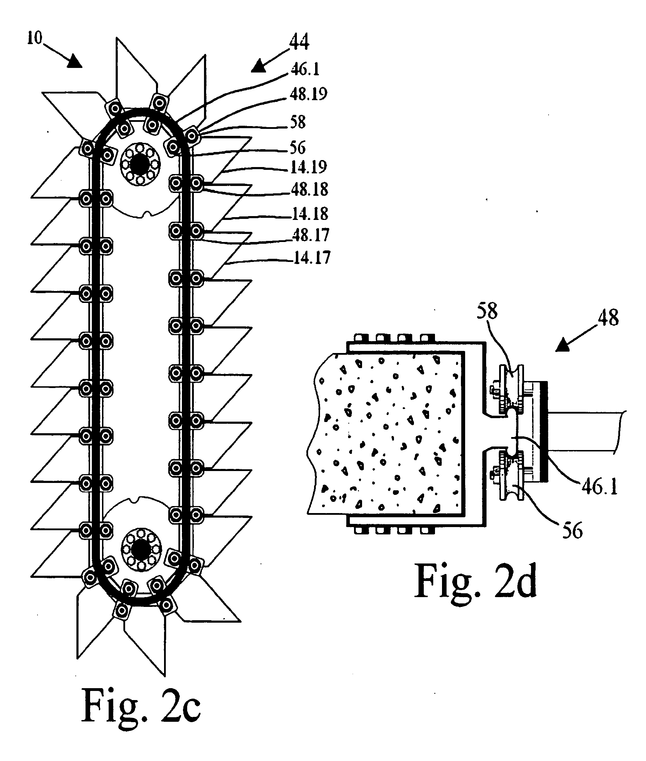

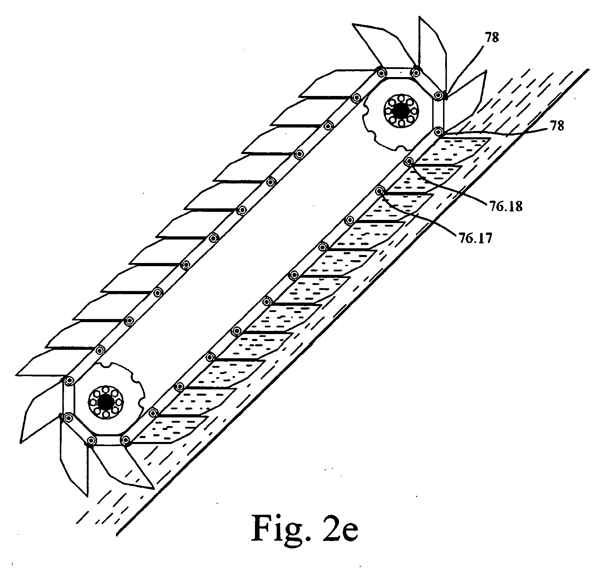

Referring now to Figure 2a, a second embodiment of the invention is presented, in which lead 44 comprises only one lead system 46 representing a circular path that uninterruptedly guides a first roller set 52.19 and a second roller set 54.19. Each water container 14 contains a respective first roller set 52 and a second roller set 54. Both roller sets are shown with a respective counting suffix. For the sake of clarity, the counting suffix is omitted in the following paragraphs.

First roller set 52 (see first roller set 52.19) comprises an inner roller 56 and an outer roller 58 that encompass lead 44. A second roller set 54 itself comprises an inner roller 60 and an outer roller 62 that also encompass lead 44, which in these embodiments equals to leads system 46.1. Lead 44 uninterruptedly guides the water containers 14 on closed path.

Figure 2b shows a detail of inner roller 56 and outer roller 58 of the first roller set 52. Inner roller 56 and outer roller 58 are both pre-tensioned via springs (not shown) to lead system 46.1.

Referring now to Figure 3, a front view of the hydroelectric power plant 10 according to the invention has second upper wheel 42.2 and second chain 22.2. An upper axle 64 bearing upper wheel 42 is additionally supported by a support structure 66.

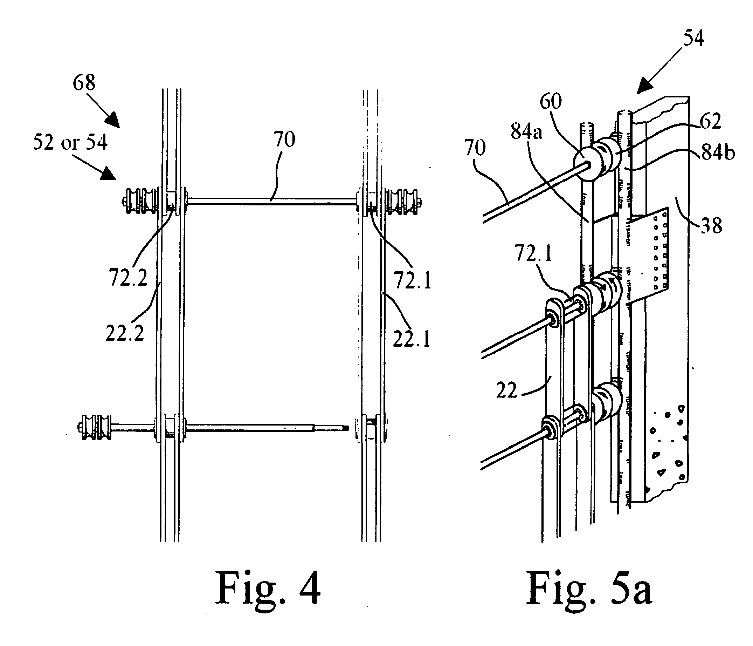

Figure 4 shows a horizontal guiding assembly 68 according to an embodiment of the hydroelectric power plant according to the invention. Horizontal guiding assembly 68 comprises a guiding rod 70, a first sleeve 72.1 linking the guiding rod 70 to the first chain 22.1, and a second sleeve 72.2 linking the guiding rod to the second chain 22.2. First roller set 52 is mounted to horizontal guiding assembly 68 as well as second roller set 54. The water containers that are not shown in this Figure are mounted to the first and second sleeve 72.1, 72.2. The guiding rod 70 is arranged to be removed from sleeves 72.1, 72.2 without the need to remove the water container from the chains. This especially useful, if one of the rollers of first roller set 52 or second roller set 54 is worn.

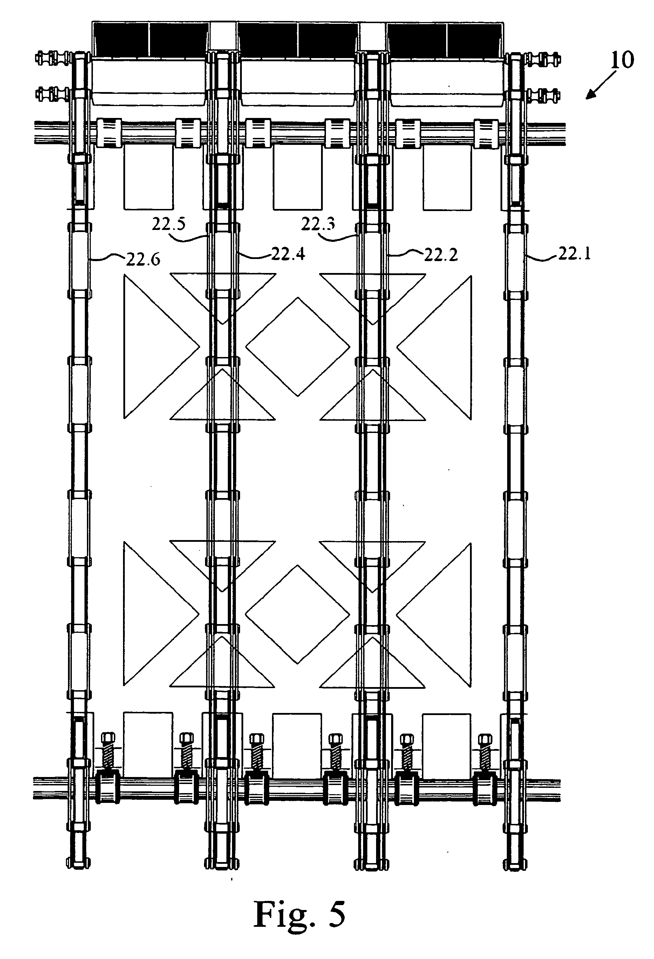

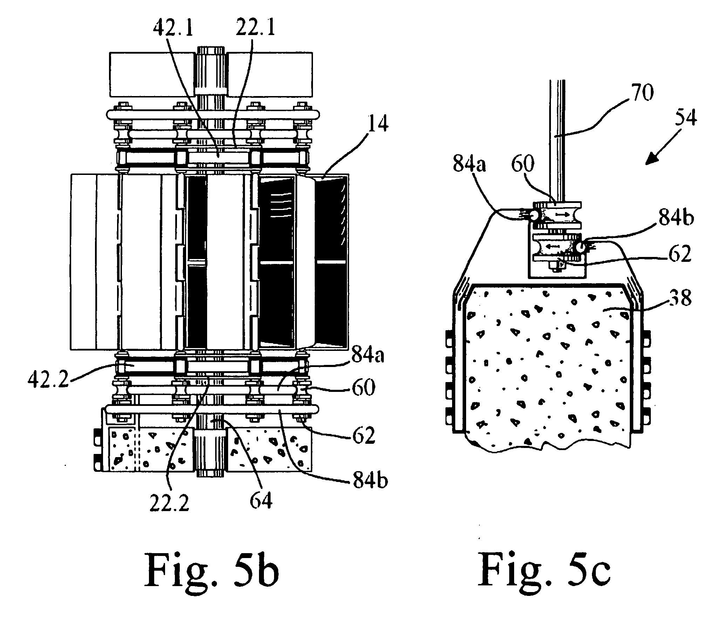

Referring now to Figure 5, another embodiment of the inventive hydroelectric power plant is shown that comprises six chains 22.1 to 22.6 for bearing particularly heavy water containers.

Figure 5a depicts a perspective view of the embodiment according to Figure 5. In the embodiment of Figure 5a the lead comprises two lead elements in form of tubular steel tracks 84a, 84b. The second roller set 54 comprises an inner roller 60 and an outer roller 62, whereby "inner" and "outer" refer to the position with respect to guiding rod 70. During use, inner roller 60 abuts track 84a and outer roller 62 abuts track 84b. Thus, rod 70 is guided permanently by the tracks 84a, 84b. In use, inner roller 60 and outer roller 62 rotate in different directions of rotation, as can be seen by the arrows. This yields an easy to maintain power plant.

Referring now to Figure 5b, there is shown a front view of a detail of the hydroelectric power plant according to the invention. Figure 5c shows a cross-section of the embodiment according to Figure 5a.

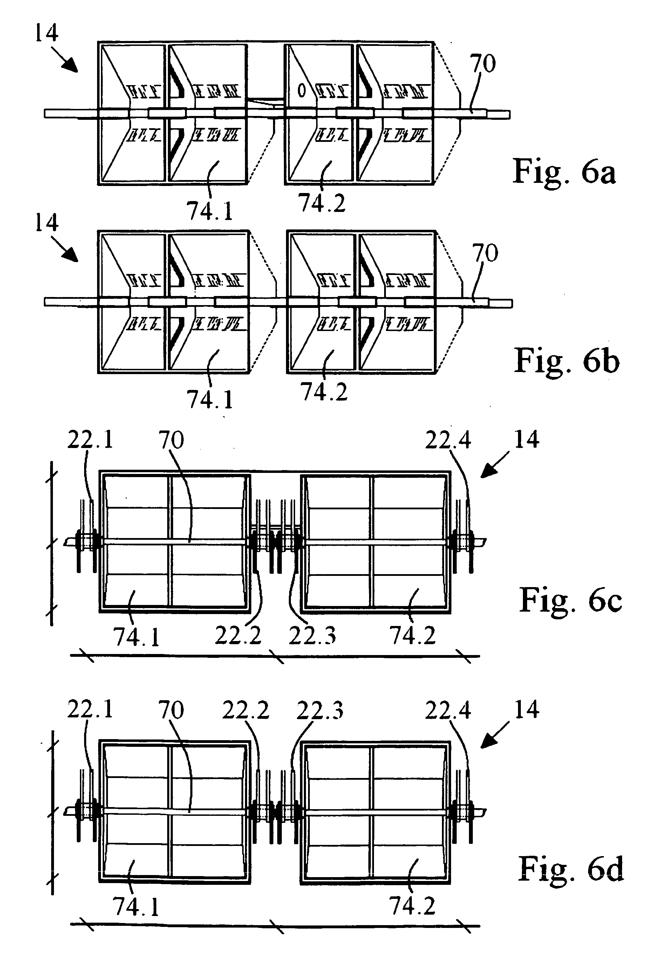

Figure 6a shows a water container 14 containing to container elements 74.1, 74.2 that are both connected to guiding rod 70. Container elements 42.1, 42.2 are interconnected.

Referring to Figure 6b, container elements 74.1, 74.2 are no separate and each container element is connected to guiding rod 70.

Referring now to Figure 6c, the water container 14 still is comprised of two container elements 74.1, 74.2 that are now attached to four chains 22.1, 22.2, 22.3, 22.4 via guiding rod 70.

In Figure 6c, the container elements 74.1, 74.2 are linked to each other.

Figure 6d shows another embodiment that relates to the embodiment according to Figure 6c, wherein the container elements 74.1, 74.2 are independently attached to chains 22.1, 22.2, 22.3. 22.4 via guiding rod 70. In all Figures 6a to 6d the chains 22 carry the water containers 14 from their sides in the middle, and if the water containers are large, they are carried by three parallel chains, as shown in Figures 6c and 6d to make the water containers descend vertically with balance and stability. The two water containers in Figures 6a - 6d preferably have the same volume, so that there is no need to make the water containers to strong and heavy.

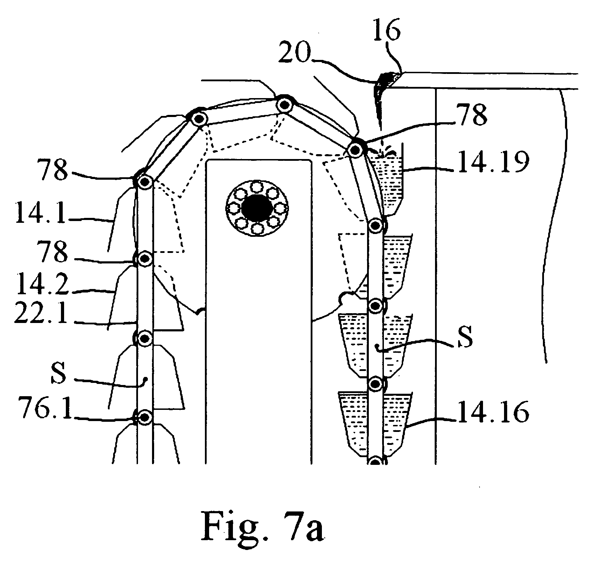

Now with reference to Figure 7a, it can be seen that the water containers 14 may be hinged to the first chain 22.1 by a first hinge 76.1 and are connected to the second chain by a second hinge, both are not shown in Figure 7a. The hinges 76 are located above a center of gravity S of the water containers 14 as they are filled with water.

Figure 7a also depicts a flexible barrier element 78 that links two neighboring water containers, e.g. water containers 14.1 and 14.2. The barrier elements 78 may be made from rubber or cloth and are arranged such that water 20 from water outlet opening 16 is guided directly into the water containers 14, thus reducing spilling. The barrier elements 78 are also arranged for protecting the hinges 76.

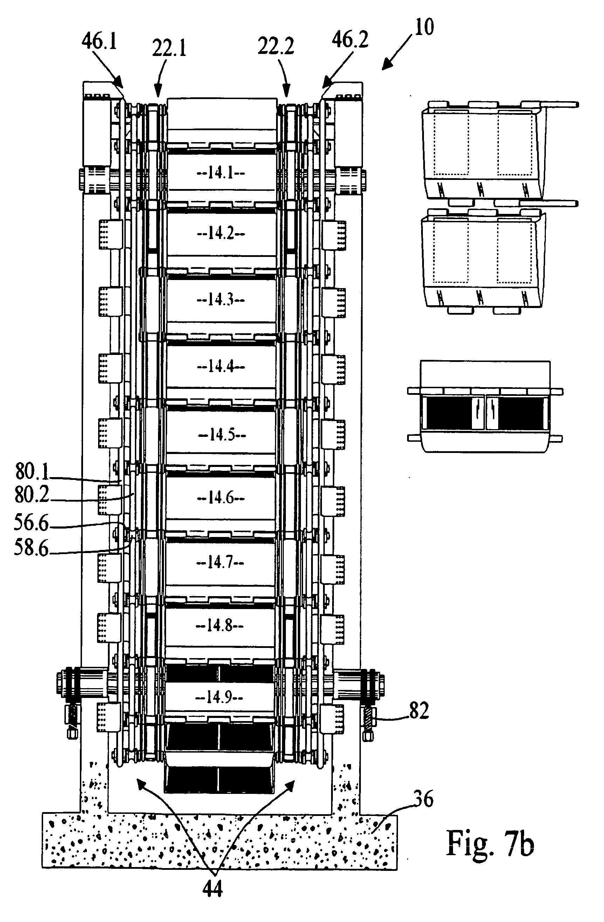

Figure 7b shows a view of the hydroelectric power plant 10 according to Figure 7a. The lead 44 comprises first system 46.1 and second lead system 46.2, first lead system 46.1 being arranged on a left hand side of water containers 14, second lead system 46.2 being arranged on the opposite side with respect to the water containers 14. Both lead systems 46.1, 46.2 comprise two tubular steel tracks 80.1, 80.2 cooperating with rollers 56 and 58, respectively. The strong tubular steel tracks defines the path of the water containers so as to limit a movement of the chains 22.1, 22.2 and to prevent the chains 22.1, 22.2 from bending and shaking, which may be caused by the weight of the water containers and/or tempests. A screw rod 82 is installed on the lower part concrete base 36. The lead 44 is arranged so as to limit the turning direction of the chain, so that the chain can move smoothly according to the predetermined track. Hence, the chain will be stabilized and prevented from swinging and oscillating.

The water containers may be fabricated from lightweight materials, such as plastic, aluminium, or special cloth suitable for this purpose. They may be supported with a steel frame and/or by other strong and light weight material frames.

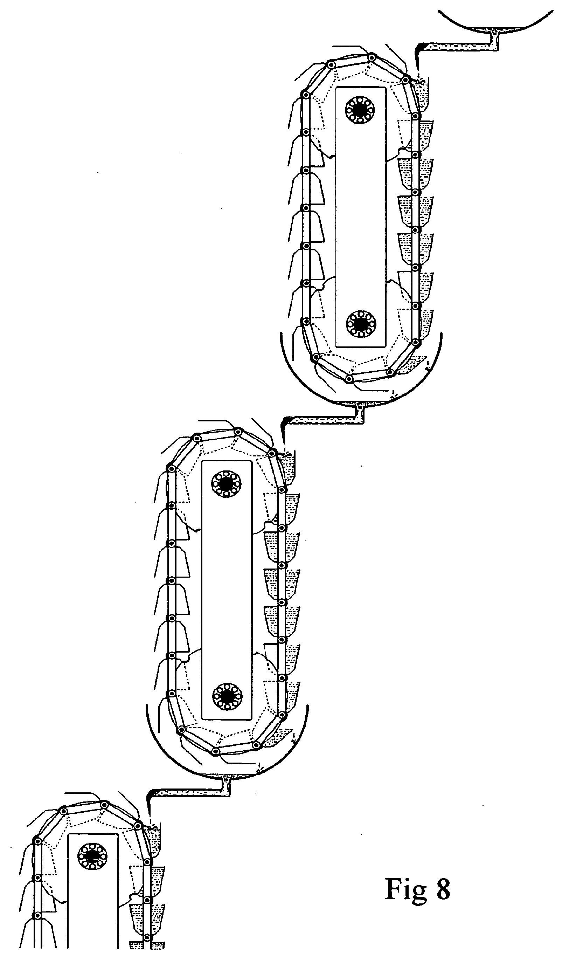

Figure 8 shows a schematic view of another hydroelectric power plant according to the invention, wherein two or more of the hydroelectric power plants as described before are arranged in a sequence to form an inventive hydroelectric power plant assembly.

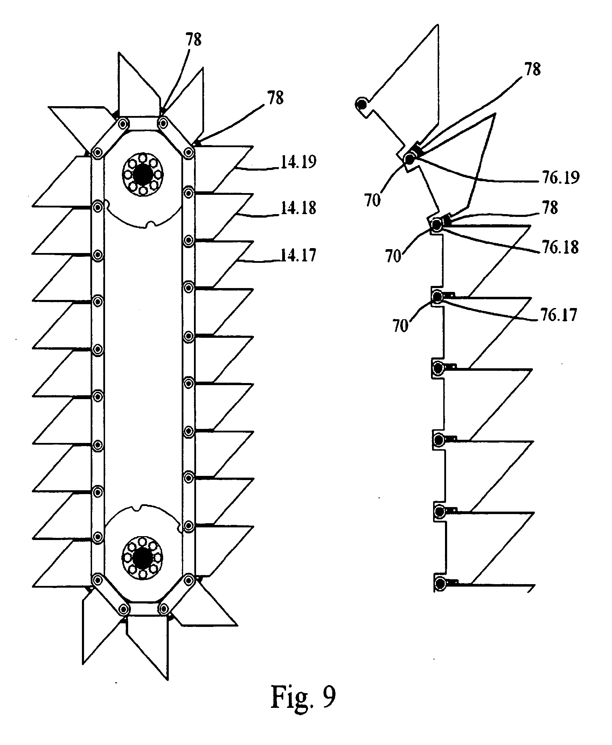

Figure 9 shows the barrier elements 78 that link two neighboring water containers 14 and that cover and thus protect the guiding rods 70.

### Reference numerals

- 10: hydroelectric power plant
- 12: chain system
- 14: water container
- 16: water outlet opening
- 18: water duct

- 20: water
- 22.1: first chain
- 22.2: second chain
- 24: transmission wheel
- 26: axle
- 28: driving wheel

- 30: driving chain
- 32: generator
- 34: down end
- 36: concrete base
- 38: concrete column

- 40: column lead
- 42: upper wheel
- 44: lead
- 46.1,26.2: lead system
- 48: inner lead system

- 50: outer lead element
- 52: first roller set
- 54: second roller set
- 56: inner roller
- 58: outer roller

- 60: inner roller
- 62: outer roller
- 64: upper axle
- 66: support structure
- 68: horizontal guiding assembly

- 70: guiding rod
- 72.1, 72.2: sleeve
- 74: container element
- 76: first hinge
- 78: barrier element

- 80: tubular steel tracks
- 82: screw rod
- 84: lead element/tubular steel track

- D_{work}: working direction
- S: center of gravity

## Claims

1. Hydroelectric power plant, comprising:
(a) a chain system (12) having
- at least a first chain (22.1),
- a second chain (22.2), and
- at least two wheels engaged with the first chain (22.1) and the second chain (22.2),
(b) a plurality of water containers (14) attached to the chain system (12),
(c) a water outlet opening (16) arranged for allowing water (20) to fill the water containers (14), so that the water containers (14) cause the chains to move in a working direction (D_{work}) and to turn the at least two wheels in a turning direction, and
(d) a closed lead (44) cooperating with rollers that abut and/or encompass the lead (44)
**characterized in**
(e) a flexible barrier element (78) linking two neighbouring water containers for directing water (20) into the water containers (14) during a filling procedure and/or for protecting the hinges (76).

2. Hydroelectric power plant according to claim 1, **characterized in that** the lead is a closed loop.

3. Hydroelectric power plant according to any preceding claim, **characterized in that** the chain system (12) comprises a plurality of horizontal guiding assemblies (68) connecting the at least two chains, each horizontal guiding assembly (68) having
(i) a guiding rod (70),
(ii) a first sleeve ( 72.1) linking the guiding rod (70) to the first chain (22.1),
(iii) a second sleeve (72.2) linking the guiding rod to the second chain (22.2),
(iv) a first roller set (52) turnably mounted to the first sleeve at a first end of the horizontal guiding assembly (68),
(v) a second roller set (54) turnably mounted to the second sleeve at a second end of the horizontal guiding assembly (68),
(vi) the lead (44) cooperating with the first roller set (52) and the second roller set (54) for leading the horizontal guiding assemblies (68).

4. Hydroelectric power according to claim 3, wherein the guiding rod is removably received in the first sleeve (72.1) and the second sleeve (72.2), such that the guiding rod may be removed without unmounting any of the chains (12).

5. Hydroelectric power plant according to claim 2 or 4, **characterized** that the first roller set (52) comprises at least one inner roller (56) and at least one outer roller (58) for encompassing the lead for stabilizing the chain system (12).

6. Hydroelectric power plant according to claim 2 or 4, **characterized in** the lead comprising an inner lead element and an outer lead element,
the inner roller (56) being guided by the inner lead element (84a) and the outer roller (58) being guided by the outer lead element (84b),
wherein the inner roller (56) and the outer roller (58) are coaxially mounted to the guiding rod (70).

7. Hydroelectric power plant according to any preceding claim, **characterized in that** the water containers (12) are connected to the first chain (22.1) by a first hinge (76) and to the second chain (22.2) by a second hinge, the hinges being located above a centre of gravity (S) of the water containers (14) when they are filled with water (20).

8. Hydroelectric power plant according to any preceding claim, **characterized in that** the flexible barrier is contains or is made from rubber and/or textile.

9. Hydroelectric power plant according to any preceding claim, **characterized in that** the water containers (14) comprise a plastic tank received in a metal frame, preferably the plastic tank being upwardly half closed and having a water inlet at the other half.

10. Hydroelectric power plant according to any preceding claim, **characterized in** a chain tensioning device.

11. Hydroelectric power plant according to any preceding claim, **characterized in that** the chains a running in a substantially vertical direction.

12. Hydroelectric power plant according to any proceeding claim, **characterized in that** the chain system (12) has a third chain, wherein the water containers are connected to all at least three chains, the chains being arranged for keeping the a guiding rod (70) in a straight position.

## Patentansprüche

1. Wasserkraftwerk, bestehend aus:
(a) einem Kettensystem (12), das aufweist
- zumindest eine erste Kette (22.1),
- eine zweite Kette (22.2), und
- zumindest zwei Räder, die mit der ersten Kette (22.1) und der zweiten Kette (22.2) in Eingriff sind,
(b) einer Vielzahl von Wasserbehältern (14), die an dem Kettensystem (12) befestigt sind,
(c) einer Wasserauslassöffnung (16), die angeordnet ist, um es Wasser (20) zu ermöglichen, die Wasserbehälter (14) zu füllen, so dass die Wasserbehälter (14) bewirken, dass die Ketten sich in einer Arbeitsrichtung (D_{Arbeit}) bewegen und die zumindest zwei Räder in einer Drehrichtung drehen, und
(d) einer geschlossenen Führung (44), die mit Rollen zusammenwirkt, die an der Führung (44) anliegen und/oder diese umgreifen,
**gekennzeichnet durch**
(e) ein elastisches Abdeckelement (78), das zum Leiten des Wassers (20) in die Wasserbehälter (14) während eines Füllprozesses und/oder zum Schutz von Gelenken (76) zwei benachbarte Wasserbehälter (14) verbindet.

2. Wasserkraftwerk gemäß Anspruch 1, **dadurch gekennzeichnet, dass** die Führung ein geschlossener Kreislauf ist.

3. Wasserkraftwerk gemäß einem voranstehenden Anspruch, **dadurch gekennzeichnet, dass** das Kettensystem (12) eine Vielzahl von horizontalen Führungseinrichtungen (68) aufweist, die die zumindest zwei Ketten miteinander verbinden, jede horizontale Führungseinrichtung (68) besteht aus
(i) einer Führungsstange (70),
(ii) einer ersten Buchse (72.1), die die Führungsstange (70) an die erste Kette (22.1) koppelt,
(iii) einer zweiten Buchse (72.2), die die Führungsstange an die zweite Kette (22.2) koppelt,
(iv) einem ersten Rollensatz (52), der an der ersten Buchse an einem ersten Ende der horizontalen Führungseinrichtung (68) drehbar gelagert ist,
(v) einem zweiten Rollensatz (54), der an der zweiten Buchse an einem zweiten Ende der horizontalen Führungseinrichtung (68) drehbar gelagert ist,
(vi) einer Führung (44), die mit dem ersten Rollensatz (52) und dem zweiten Rollensatz (54) zum Führen der horizontalen Führungseinrichtung (68) zusammenwirkt.

4. Wasserkraftwerk gemäß Anspruch 3, worin die Führungsstange in der ersten Buchse (72.1) und der zweiten Buchse (72.2) lösbar aufgenommen ist, so dass die Führungsstange ausgebaut werden kann ohne die Ketten (12) zu lösen.

5. Wasserkraftwerk gemäß Anspruch 2 oder 4, **dadurch gekennzeichnet, dass** der erste Rollensatz (52) zumindest eine innere Rolle (56) und zumindest eine äußere Rolle (58) für ein Umgreifen der Führung zur Stabilisierung des Ketttensystems (12) aufweist.

6. Wasserkraftwerk gemäß Anspruch 2 oder 4, **gekennzeichnet durch** die Führung, die ein inneres Führungselement und ein äußeres Führungselement aufweist,
die innere Rolle (56) ist mittels des inneren Führungselementes (84a) geführt und
die äußere Rolle (58) ist mittels des äußeren Führungselementes (84b) geführt,
worin die innere Rolle (56) und die äußere Rolle (58) an der Führungsstange (70) koaxial gelagert sind.

7. Wasserkraftwerk gemäß einem voranstehenden Anspruch, **dadurch gekennzeichnet, dass** die Wasserbehälter (12) mittels eines ersten Gelenks (76) mit der ersten Kette (22.1) und mittels eines zweiten Gelenks mit der zweiten Kette (22.2) verbunden sind, die Gelenke sind oberhalb des Schwerpunkts (S) der Wasserbehälter (14) angeordnet, sobald diese mit Wasser (20) gefüllt sind.

8. Wasserkraftwerk gemäß einem voranstehenden Anspruch, **dadurch gekennzeichnet, dass** die elastische Abdeckung Gummi und/oder Gewebe enthält oder daraus hergestellt ist.

9. Wasserkraftwerk gemäß einem voranstehenden Anspruch, **dadurch gekennzeichnet, dass** die Wasserbehälter (14) einen Kunststoffbehälter aufweisen, der in einem Metallgehäuse aufgenommen ist, vorzugsweise ist der Kunststoffbehälter aufwärts gerichtet halb geschlossen und weist einen Wassereinlass an der anderen Hälfte auf.

10. Wasserkraftwerk gemäß einem voranstehenden Anspruch, **gekennzeichnet durch** eine Kettenspanneinrichtung.

11. Wasserkraftwerk gemäß einem voranstehenden Anspruch, **dadurch gekennzeichnet, dass** die Ketten in einer im Wesentlichen vertikalen Richtung laufen.

12. Wasserkraftwerk gemäß einem voranstehenden Anspruch, **dadurch gekennzeichnet, dass** das Kettensystem (12) eine dritte Kette aufweist, worin die Wasserbehälter mit allen zumindest drei Ketten verbunden sind, die Ketten sind angeordnet, um die Führungsstange (70) in einer geraden Position zu halten.

## Revendications

1. Installation de puissance hydroélectrique comprenant :
(a) un système à chaîne (12) ayant
- au moins une première chaîne (22.1),
- une seconde chaîne (22.2), et
- au moins deux roues engagées avec la première chaîne (22.1) et la seconde chaîne (22.2),
(b) une pluralité de réceptacles à eau (14) attachés au système à chaîne (12),
(c) une ouverture de sortie d'eau (16) agencée pour permettre à l'eau (20) de remplir les réceptacles à eau (14), de sorte que les réceptacles à eau (14) amènent les chaînes à se déplacer dans une direction de travail (D_{work}) et à faire tourner lesdites au moins deux chaînes dans une direction de rotation, et
(d) un chenal fermé (44) coopérant avec des rouleaux qui viennent buter et/ou qui englobent le chenal (44)
**caractérisée par**
(e) un élément formant barrière flexible (78) qui relie deux réceptacles à eau voisins pour diriger l'eau (20) vers les réceptacles à eau (14) pendant une procédure de remplissage et/ou pour protéger les articulations (76).

2. Installation de puissance hydroélectrique selon la revendication 1, **caractérisée en ce que** le chenal est en boucle fermée.

3. Installation de puissance hydroélectrique selon l'une quelconque des revendications précédentes, **caractérisée en ce que** le système à chaîne (12) comprend une pluralité d'assemblages de guidages horizontaux (68) qui connectent lesdites au moins deux chaînes, chaque assemblage de guidage horizontal (68) ayant
(i) une barre de guidage (70),
(ii) un premier manchon (72.1) qui relie la barre de guidage (70) à la première chaîne (22.1),
(iii) un second manchon (72.2) qui relie la barre de guidage à la seconde chaîne (22.2),
(iv) un premier jeu de rouleaux (52) montés en rotation sur le premier manchon à une première extrémité de l'assemblage de guidage horizontal (68),
(v) un second jeu de rouleaux (54) montés en rotation sur le second manchon à une seconde extrémité de l'assemblage de guidage horizontal (68),
(vi) le chenal (44) coopérant avec le premier jeu de rouleaux (52) et avec le second jeu de rouleaux (54) pour mener les assemblages de guidage horizontaux (68).

4. Installation de puissance hydroélectrique selon la revendication 3, dans laquelle la barre de guidage est reçue de manière amovible dans le premier manchon (72.1) et le second manchon (72.2), de telle sorte que la barre de guidage peut être enlevée sans démonter l'une quelconque des chaînes (12).

5. Installation de puissance hydroélectrique selon la revendication 2 ou 4, **caractérisée en ce que** le premier jeu de rouleaux (52) comprend au moins un rouleau intérieur (56) et au moins un rouleau extérieur (58) pour englober le chenal afin de stabiliser le système à chaîne (12).

6. Installation de puissance hydroélectrique selon la revendication 2 ou 4, **caractérisée en ce que** le chenal comprend un élément de chenal intérieur et un élément de chenal extérieur,
le rouleau intérieur (56) étant guidé par l'élément de chenal intérieur (84a) et
le rouleau extérieur (58) étant guidé par l'élément de chenal extérieur (84b),
dans laquelle le rouleau intérieur (56) et le rouleau extérieur (58) sont montés coaxialement à la barre de guidage (70).

7. Installation de puissance hydroélectrique selon l'une quelconque des revendications précédentes, **caractérisée en ce que** les réceptacles à eau (12) sont connectés à la première chaîne (22.1) par une première articulation (76) et à la seconde chaîne (22.2) par une seconde articulation, les articulations étant situées au-dessus d'un centre de gravité (S) des réceptacles à eau (14) lorsqu'ils sont remplis avec de l'eau (20).

8. Installation de puissance hydroélectrique selon l'une quelconque des revendications précédentes, **caractérisée en ce que** la barrière flexible contient du caoutchouc et/ou un textile, ou est réalisée en caoutchouc et/ou en textile.

9. Installation de puissance hydroélectrique selon l'une quelconque des revendications précédentes, **caractérisée en ce que** les réceptacles à eau (14) comprennent un réservoir en matière plastique reçu dans un cadre en métal, le réservoir en matière plastique étant de préférence à moitié fermé vers le haut et comportant une entrée d'eau sur l'autre moitié.

10. Installation de puissance hydroélectrique selon l'une quelconque des revendications précédentes, **caractérisée par** un dispositif de tensionnement des chaînes.

11. Installation de puissance hydroélectrique selon l'une quelconque des revendications précédentes, **caractérisée en ce que** les chaînes circulent dans une direction sensiblement verticale.

12. Installation de puissance hydroélectrique selon l'une quelconque des revendications précédentes, **caractérisée en ce que** le système à chaîne (12) comprend une troisième chaîne, dans laquelle les réceptacles à eau sont connectés à toutes les trois chaînes, les chaînes étant agencées pour maintenir la barre de guidage (70) dans une position rectiligne.
